# EUROPÄISCHE PATENTANMELDUNG

(11) **EP 2 090 470 A1**
(43) Veröffentlichungstag der Anmeldung: **19.08.2009**
(21) Anmeldenummer: 08002676.8
(22) Anmeldetag: 13.02.2008
(51) Int. Cl.: B60R 13/08

(54) **Schallschutz-Abschirmung für den Motoren-, Unterboden-und Karosseriebereich von Kraftfahrzeugen und anderen Fahrzeugen**

(71) Anmelder: FRENZELIT-WERKE GMBH & CO. KG, 95460 Bad Berneck (DE)
(72) Erfinder: Ostermann, Ralf, Dipl.-Ing., 95183 Zedtwitz (DE); Tröger, Klaus, 95126 Schwarzenbach/Saale (DE)
(74) Vertreter: Becker Kurig Straus

(57) **Zusammenfassung**

Die vorliegende Erfindung betrifft eine Schallschutz-Abschirmung für den Motoren-, Unterboden- und Karosseriebereich von Kraftfahrzeugen und anderen Land-, Schienen- und Wasserfahrzeugen oder von Maschinengehäusen. Die Abschirmung soll insbesondere gegen den Luftschall von Karosserieteilen von Kraftfahrzeugen, Schienenfahrzeugen und Schiffen sowie von Gehäusen, insbesondere von Transformatoren, eingesetzt werden.

## Beschreibung

### Gebiet der Erfindung

Gegenstand der Erfindung ist eine Schallschutz-Abschirmung für den Motoren-, Unterboden-und Karosseriebereich von Kraftfahrzeugen und anderen Land-, Schienen- und Wasserfahrzeugen oder von Maschinengehäusen. Die Abschirmung soll insbesondere gegen den Luftschall von Karosserieteilen von Kraftfahrzeugen, Schienenfahrzeugen und Schiffen sowie von Gehäusen, insbesondere von Transformatoren, geeignet sein.

### Stand der Technik

Unter Luftschall versteht man Schallwellen, die sich über die Luft ausbreiten. Luftschall besteht im Gegensatz zum Körperschall aus reinen Longitudinalwellen, da Gase keine Scherkräfte übertragen. Im engeren Sinn wird der Begriff "Luftschall" auf den Frequenzbereich des menschlichen Gehörs beschränkt verwendet, der bei etwa 16 Hz beginnt und bei etwa 20 kHz endet. Luftschall wird unter anderem von beweglichen Maschinenteilen erzeugt, wie beispielsweise durch Karosserieteile von Kraftfahrzeugen, Schienenfahrzeugen und Schiffen.

Es ist bekannt Luftschall mittels unterschiedlicher Schallschutz-Abschirmungen zu dämpfen. Diese enthalten beispielsweise ein Dämpfungsteil aus Styropor.

Da Schallschutz-Abschirmungen beispielsweise in Karosserieteile von Kraftfahrzeugen eingebracht werden, sollen sie ein möglichst geringes Flächengewicht, bevorzugt von maximal 1300 g/m² und eine möglichst geringe Dicke, bevorzugt von maximal 20 mm, besonders bevorzugt von maximal 10 mm, aufweisen. Weiterhin sollten sie flexibel sein, um einen leichten Einbau an verschiedensten Positionen von Fahrzeugen zu erlauben. Dies ist beispielsweise bei der Verwendung von Styropor als Dämpfungsteil nicht erfüllt.

Im Stand der Technik werden weiterhin Basaltmatten zur Abschirmung gegen Luftschall eingesetzt. Bei Basaltfasern kann es aber vorkommen, dass diese auch gesundheitlich bedenkliche Fasern enthalten und aus toxikologischen Gründen nicht mehr zugelassen sind.

Zunehmend werden weitere Anforderungen an Schallschutz-Abschirmungen erfüllt, die von herkömmlichen Schallschutz-Abschirmungen nicht mehr vollständig erfüllt werden können. So soll das Brandverhalten gemäß der Prüfmethode FMVSS 302 eine Flammausbreitungsgeschwindigkeit über eine Messtrecke von maximal 4 inch/Minute (= 101,6 mm/Minute) zeigen.

Weiterhin sollen die Schallschutz-Abschirmungen einen geringen Beschlag bzw. einen geringen Foggingwert F in % gemäß DIN 75 201 aufweisen. Als Fogging wird die Kondensation von flüchtigen Bestandteilen aus der Fahrzeug-Ausstattung, insbesondere auch aus der Innenausstattung, an den Glasscheiben, d. h. an der Windschutzscheibe, bezeichnet. Bei ungünstigen Beleuchtungsverhältnissen kann der Fogging-Niederschlag die Sicht durch die Windschutzscheibe beeinträchtigen. Ein gutes Fogging- und Geruchsverhalten ist aber auch im "Exterieurbereich" von Kraftfahrzeugen wichtig, da dies sonst zu einer Geruchsbelästigung über das Kfz-Gebläse führen kann.

Gemäß der Norm VDA 270 wird ein günstiges Geruchsverhalten bei Temperatur- und Klimaeinwirkung gefordert. Unter Geruchsverhalten versteht man die Neigung von Werkstoffen, flüchtige Bestandteile abzugeben, die einen wahrnehmbaren Geruch aufweisen. Die Geruchsbeurteilung erfolgt anhand einer Bewettungsskala von 1 bis 6: Note 1 (nicht wahrnehmbar), Note 2 (wahrnehmbar, nicht störend), Note 3 (deutlich wahrnehmbar, aber noch nicht störend), Note 4 (störend), Note 5 (stark störend), Note 6 (unerträglich). Üblicherweise wird als Grenzwert ein Fogging mit einer Note schlechter 3 nicht mehr akzeptiert.

Weiterhin ist es im Stand der Technik bekannt, Hitzeschutzbleche zur Abschirmung von Schall und Hitze gegenüber dem Fahrzeug im Motoren- und Auspuffbereich zu verwenden. Die Abschirmungen werden zwischen der Fahrzeugunterseite und der Auspuffanlage angebracht.

Sie dienen dazu, brennbare Materialien wie den Unterbodenschutzbelag oder Gummiteile vor großer Hitze und vor dem Entflammen zu schützen.

### Beschreibung der Erfindung

Es ist daher Aufgabe der vorliegenden Erfindung eine Schallschutz-Abschirmung bereitzustellen, die die oben erwähnten Anforderungen und Normen erfüllt. Weiterhin sollen Schichtaufbauten verwendet werden, die ein maximales Flächengewicht von 1300g/m² aufweisen und die Fasern enthalten, die gesundheitlich unbedenklich sind.

Die obige Aufgabe wird erfindungsgemäß durch eine Schallschutz-Abschirmung, ohne Verwendung einer Schwerschicht, d. h. ohne Verwendung von z. B. Aluminiumblechen oder Metallblechen, gelöst, wobei die Abschirmung einen Schichtaufbau aufweist und je eine der folgenden Schichten umfasst: Glasfaservliesschicht (Kernschicht) sowie Faservliesschicht, wobei die Faservliesschicht Fasern enthält, die ausgewählt sind aus der Gruppe, bestehend aus Polyesterfasern, Polypropylenfasern, Polyester-Polypropylen-Bikomponentenfasern, Carbonfasern, Polyamidfasern und Mischungen daraus, wobei die Glasfaservliesschicht mit mindestens einer Faservliesschicht abgedeckt ist.

In den Unteransprüchen sind vorteilhafte Ausführungsformen der Erfindung enthalten.

In einer bevorzugten Ausführungsform der Erfindung enthält die Schallschutz-Abschirmung einen Kern aus einer Glasfaservliesschicht aus gesundheitlich unbedenklichen E-Glasfasern, d. h. mit Durchmessern von 6 bis 13 µm, wobei an den beiden Seiten der Glasfaserschicht verfestigte Deckschichten aus Polyesterspinnvlies oder Carbonfaservlies angebracht sind. Gemäß einer ersten Ausführungsform (Deckschicht aus PES-Spinnvlies) wird zur Verbindung der Deckschichten mit dem Glasfaservlies ein Polyesterklebeweb und im zweiten Fall (Carbonfaservlies) eine Melaminklebepunktbeschichtung verwendet.

Vorteil der erfindungsgemäßen Schallschutz-Abschirmung ist, dass keine Schicht oder kein Trägerteil aus SMC (Sheet-Moulding-Compound) verwendet wird und somit auch keine Schwerschicht notwendig ist. Weiterhin besteht auch keine Notwendigkeit, Abdeckungen oder Abdeckschichten mit Aluminium-Folie zu verwenden.

Ein weiterer Vorteil der erfindungsgemäßen Schallschutz-Abschirmung ist ihre Leichtigkeit, d. h. ein maximales Flächengewicht von 1300 g/m².

Eine Befestigung der erfindungsgemäßen Schallschutz-Abschirmung an einem vorhandenen Träger aus Kunststoff oder Metall kann mittels Heißkleber hergestellt werden.

Jede der Deckschichten weist bevorzugt ein Flächengewicht von jeweils 40 - 150 g/m² auf. Es ist möglich, das Schallschutzverhalten der Schallschutz-Abschirmung über das Flächengewicht der Deckschicht zu steuern.

Um ein höheres Volumen (Erhöhung der Dicke der Schicht) der Glasfaservliesschichten zu erreichen, können diese Fasern gekräuselt sein.

In einer bevorzugten Ausführungsform der Erfindung enthält jede der Deckschichten Polyesterfasern, und jede der Deckschichten kann weiterhin bis zu 20 Gew.-% Polyester-Polypropylen-Bikomponentenfasem umfassen. Eine Schallschutz-Abschirmung gemäß dieser Ausführungsform ist gegenüber Temperaturen bis zu 200°C brandsicher.

In einer weiteren bevorzugten Ausführungsform der Erfindung enthält jede der Deckschichten Carbonfasern. Eine Schallschutz-Absehirmung gemäß dieser Ausführungsform ist gegenüber Temperaturen bis zu 350°C brandsicher.

Die Verbindung zwischen Deckschichten und Glasfaservlies erfolgt bevorzugt mittels eines Melaminklebers. Ein solcher Kleber weist eine relativ hohe Temperaturbeständigkeit auf.

Das Glasfaservlies weist bevorzugt ein Flächengewicht von 400-1000 g/m² auf, um die Anforderungen an das Gesamtflächengewicht der Schallschutz-Abschirmung zu erfüllen.

Das Glasfaservlies ist bevorzugt vernadelt, so dass auf die Verwendung eines leicht entflammbaren Bindemittels verzichtet werden kann. Weiterhin handelt es sich bei den Glassfasern des Glasfaservlieses bevorzugt um E-Glasfasern, welche besonders kostengünstig sind. Der Durchmesser dieser E-Glasfasern beträgt bevorzugt 6-13 µm, um Gesundheitsgefahren durch das Einatmen sehr dünner Glasfasern auszuschließen.

Die erfindungsgemäße Schallschutz-Abschirmung kann zum Schutz gegen Luftschall von Karosserieteilen von Kraftfahrzeugen, Schienenfahrzeugen und Schiffen, sowie Gehäusen von Maschinen, insbesondere von Transformatoren, verwendet werden. Hierzu kann er beispielsweise in Radlaufschalen oder Radkappen, im Motorraum oder am Unterboden eines Kraftfahrzeugs aufgenietet oder aufgeschweißt (sogenanntes Hotmelt-Verfahren) werden.

Die folgenden Beispiele und die Figur sollen die vorliegende Erfindung genauer veranschaulichen, ohne einschränkend zu wirken:

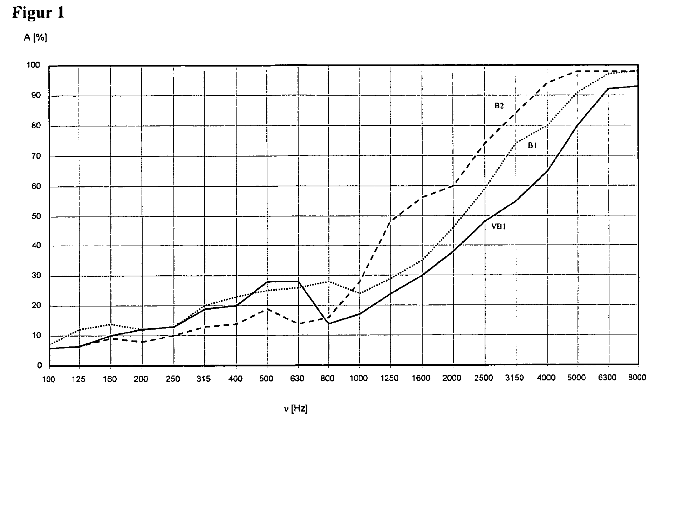

Figur 1 zeigt den Verlauf des Absorptionsgrades in % für die Frequenzen von 100 bis 8000 Hz von verschiedenen Schallschutz-Abschirmungen: B1 = Beispiel 1 (erfindungsgemäß), B2 = Beispiel 2 (erfindungsgemäß), VB 1: Vergleichsbeispiel (Stand der Technik).

### Beispiele

Eine erfindungsgemäße Schallschutz-Abschirmung gemäß Beispiel 1 besteht aus einem E-Glasfaservlies mit einem Flächengewicht von 700 g/m² und zwei Deckschichten aus einem Polyesterspinnvlies mit einem Flächengewicht von jeweils 50 g/m². Eine erfindungsgemäße Schallschutz-Abschirmung gemäß Beispiel 2 besteht aus einem E-Glasfaservlies mit einem Flächengewicht von 700 g/m² und zwei Deckschichten aus einem Polyesterspinnvlies mit einem Flächengewicht von jeweils 70 g/m². Die Dicke der beiden erfindungsgemäßen Schallschutz-Abschirmungen beträgt jeweils ca. 6 bis 7 mm.

Durch Änderung der Mischungskomponenten im Kernvlies können aber auch Dicken von maximal 10 mm erreicht werden.

Als Vergleichsbeispiel besteht eine Schallschutz-Abschirmung aus nur einem E-Glasfaservlies mit einem Flächengewicht von 700 g/m² ohne Deckschichten.

Der Schallabsorptionsgrad A in % wurde bei Frequenzen ν von 100 Hz bis 8000 Hz gemäß der Opel-Norm 339 für die drei oben erwähnten Schallschutz-Abschirmungen gemessen. Hierzu wurde ein Kund'sches Rohr Brüel & Kjaer Typ 4002 (100 mm Durchmesser für Messungen von 100 Hz bis 1800 Hz und 30 mm Durchmesser für Messungen oberhalb 1800 Hz bis 800 Hz), ein Sinusgenerator Brüel & Kjaer Typ 1023 und ein Präzisionsmessverstärker Brüel & Kjaer Typ 2610 verwendet. Die Ergebnisse sind in einem Diagramm in Figur 1 aufgetragen. Es zeigt sich ein gleichmäßiger Anstieg des Absorptionsgrad mit der Frequenz, der bei 800 Hz leicht einbricht aber dann doch noch 98 % erreicht. Man kann erkennen, dass die Schallabsorption der erfindungsgemäßen Schallschutz-Abschirmung besser ist, als die eines Glasfaservlieses ohne Deckschichten. Weiterhin ist erkennbar, dass sich die Schallabsorption der erfindungsgemäßen Schallschutz-Abschirmung über die Dicke der Deckschichten steuern lässt.

Das Brandverhalten der Schallschutz-Abschirmungen gemäß Beispiel 1 und Beispiel 2 wurde nach FMVSS 302 bestimmt. Die Flammausbreitungsgeschwindigkeit betrug für beide erfindungsgemäßen Beispiele ≤ 100 mm/Minute, womit die Anforderungen der Norm erfüllt sind.

Der Beschlag der Schallschutz-Abschirmungen gemäß Beispiel 1 und Beispiel 2 wurde nach DIN 75 201 bestimmt. Der Foggingwert F betrug für beide erfindungsgemäßen Beispiele 67 %. Das Geruchsverhalten der Schallschutz-Abschirmungen gemäß Beispiel 1 und Beispiel 2 wurde nach der Norm VDA 270 bestimmt. Es wurde für beide erfindungsgemäßen Beispiele mit der Note 3 bewertet.

## Patentansprüche

1. Schallschutz-Abschirmung für den Motoren-, Unterboden- und Karosseriebereich von Kraftfahrzeugen und anderen Land-, Schienen- und Wasserfahrzeugen oder von Maschinengehäusen, ohne Verwendung einer Schwerschicht,
wobei die Abschirmung einen Schichtaufbau aufweist und mindestens je eine der folgenden Schichten umfasst:
Glasfaservliesschicht,
Faservliesschicht, welche Fasern enthält, die ausgewählt sind aus der Gruppe, bestehend aus Polyesterfasern, Polypropylenfasern, Polyester-Polypropylen-Bikomponentenfasern, Carbonfasern, Polyamidfasern und Mischungen daraus,
wobei die Glasfaservliesschicht mit mindestens einer Faservliesschicht abgedeckt ist.

2. Schallschutz-Abschirmung nach Anspruch 1, **dadurch gekennzeichnet, dass** die Faservlies-Deckschichten ein Flächengewicht von jeweils 40-150 g/m² aufweisen.

3. Schallschutz-Abschirmung nach einem der vorhergehenden Ansprüche 1 oder 2, **dadurch gekennzeichnet, dass** die Fasern der Glasfaservliesschicht gekräuselt sind, um ein höheres Volumen der Glasfaservliesschicht zu erreichen.

4. Schallschutz-Abschirmung nach einem der vorhergehenden Ansprüche 1 bis 3, **dadurch gekennzeichnet, dass** jede der Decksichten Polyesterfasern enthält, und jede der Deckschichten weiterhin bis zu 20 Gew.-% Polyester-Polypropylen-Bikomponentenfasern enthalten kann.

5. Schallschutz-Abschirmung nach einem der vorhergehenden Ansprüche 1 bis 4, **dadurch gekennzeichnet, dass** die Deckschicht(en) mittels eines Polyesterschmelzklebers oder eines Melaminklebers formschlüssig mit dem Glasfaservlies verbunden ist (sind).

6. Schallschutz-Abschirmung nach einem der vorhergehenden Ansprüche 1 bis 5, **dadurch gekennzeichnet, dass** das Glasfaservlies ein Flächengewicht von 400-1000 g/m² aufweist.

7. Schallschutz-Abschirmung nach einem der vorhergehenden Ansprüche 1 bis 6, **dadurch gekennzeichnet, dass** das Glasfaservlies mechanisch verfestigt ist.

8. Schallschutz-Abschirmung nach einem der vorhergehenden Ansprüche 1 bis 7, **dadurch gekennzeichnet, dass** es sich bei den Glassfasern des Glasfaservlieses um E-Glasfasern handelt.

9. Schallschutz-Abschirmung nach einem der vorhergehenden Ansprüche 1 bis 8, **dadurch gekennzeichnet, dass** die Glassfasern des Glasfaservlieses einen Durchmesser von 6 - 13 µm haben.

10. Schallschutz-Abschirmung gemäß einem der vorhergehenden Ansprüche 1 bis 9, **dadurch gekennzeichnet, dass** die Fasern der Faservliesdeckschicht(en) Flammschutzmittel enthalten.

11. Schallschutz-Abschirmung gemäß einem der vorhergehenden Ansprüche 1 bis 10, **dadurch gekennzeichnet, dass** die Glasfaservliesschicht mit verfestigten Faservliesschichten aus Carbonfasern abgedeckt ist und zur Verbindung der Deckschichten mit der Glasfaservliesschicht eine Melaminklebebeschichtung angebracht ist.

12. Schallschutz-Abschirmung gemäß einem der vorhergehenden Ansprüche 1 bis 11,
**dadurch gekennzeichnet, dass** die Fasern der Faservliesdeckschicht(en) öleophob oder hydrophob ausgerüstet sind.
